# EUROPEAN PATENT APPLICATION

(11) **EP 4 810 183 A1**
(43) Date of publication of application: **23.09.2026**
(21) Application number: 24907692.8
(22) Date of filing: 12.09.2024
(51) Int. Cl.: B23K 1/00, B23K 26/042, B23K 26/073, B23K 26/40, B23K 26/06, B23K 1/005, B23K 101/42

(54) **ALIGNMENT SOLDER, AND LASER SOLDERING APPARATUS AND SOLDERING METHOD USING SAME**

(30) Priority: 20.12.2023 KR 20230186793; 12.08.2024 KR 20240107343
(71) Applicant: Laservall Technology Co., Ltd, Suwon-si, Gyeonggi-do 16648 (KR)
(72) Inventor: CHOI, Byung-Chan, Gwangmyeong-si Gyeonggi-do 14230 (KR)
(74) Representative: Isarpatent
(86) International application number: PCT/KR2024/013875
(87) International publication number: WO 2025/135407

(57) **Abstract**

According to an embodiment of the present invention, a soldering apparatus and a soldering method are provided, the apparatus comprising:
a solder unit configured to supply an align solder that is insertable into a fixing pin of a fixing block, the fixing pin being inserted into each of a plurality of insertion holes formed in a circuit board, and to insert the align solder into the fixing pin; and
a laser generating unit configured to generate laser light having one or more wavelengths,
wherein the align solder and the fixing pin are irradiated with laser beams of identical or different wavelengths to perform soldering.

## Description

### FIELD OF DISCLOSURE

The present invention relates to an align solder, a laser soldering apparatus using the same, and a soldering method employing the same.

### BACKGROUND

The miniaturization and thinning of electronic devices have been rapidly progressing. Furthermore, semiconductor devices and other electronic components mounted on such electronic devices are also required to be miniaturized and thinned. As electronic components become increasingly dense, the number of connection terminals has been increasing.

To meet these requirements, mounting methods for electronic components have recently adopted techniques such as flip chip mounting, in which solder balls are surface-mounted as external connection terminals on a mounting substrate such as a printed circuit board. In this mounting method, solder balls or solder wires are placed on electrodes formed on the substrate of an electronic component, and the solder balls or solder wires are then directly bonded to the electrodes of the mounting substrate. When a surface mounting method utilizing solder balls or solder wires is applied, solder balls or solder wires are positioned on the electrodes of the substrate where the solder balls or solder wires are to be mounted, and the solder balls or solder wires are then heated and melted to bond them to the electrodes.

Here, the portions where solder balls or solder wires must be applied vary depending on the size and connection stability of the electronic component, and the width or volume of those portions also differs.

However, in surface mounting methods employing solder balls or solder wires, it is difficult to control the amount and position of the solder to be mounted and to ensure the uniformity of the mounted solder. With the growing demand for high-accuracy and high-quality soldering, various types of solders and application methods have been studied to achieve improved control.

### [PRIOR DOCUMENT(S)]

### [Patent Documents]

(Patent Document 0001) Korean Registered Patent Publication No. 10-1306303 (Registration Date: September 3, 2013)

### DISCLOSURE OF THE INVENTION

### Technical Problems

The present invention has been devised to solve the above-described technical problems, and an object of the invention is to provide an align solder, a laser soldering apparatus using the same, and a soldering method employing the same, which can improve the reliability of the soldering process by providing the solder at a soldering position in a specific shape for fixing an image module onto a circuit board through soldering.

The objects of the present invention are not limited to those described above, and other objects that are not explicitly mentioned will be clearly understood by those skilled in the art from the following detailed description of the invention.

### SOLUTION TO PROBLEMS

According to one embodiment of the present invention, a laser soldering apparatus comprises:
a soldering unit configured to supply an align solder that is insertable into a fixing pin of a fixing block, the fixing pin being inserted into a plurality of insertion holes formed in a circuit board, and to insert the align solder into the fixing pin; and
a laser generating unit configured to generate a laser having one or more wavelengths, wherein the align solder and the fixing pin can be soldered by irradiating the same or different wavelengths of laser onto the align solder and the fixing pin.

According to one embodiment of the present invention,
the laser generating unit
may sequentially irradiate the laser onto the align solders inserted into the plurality of insertion holes.

According to another embodiment, a plurality of laser generating units may be provided
so that lasers can be simultaneously irradiated onto the respective align solders inserted into the plurality of insertion holes.

According to one embodiment, the laser generating unit
may irradiate a laser onto the already-soldered align solder to perform a rework process.

According to one embodiment, the align solder may include a bushing solder formed in a ring shape.

According to another embodiment, the align solder may include a sleeve solder formed in a sleeve shape.

According to one embodiment, the laser generating unit may include a first generating unit for irradiating a laser onto the fixing pin, and a second generating unit for irradiating a laser onto the align solder.

According to one embodiment, the second generating unit may generate and irradiate a ring-shaped laser beam onto the align solder.

According to one embodiment, a control unit may be provided to control the output of the lasers generated by the first generating unit and the second generating unit according to the materials of the fixing pin and the align solder.

According to one embodiment, transmission of the laser beam may be performed through an optical fiber.

According to one embodiment, the apparatus may further comprise a beam conversion device configured to adjust the shape of the laser beam.

According to one embodiment, the apparatus may further comprise a beam adjustment unit configured to adjust the irradiation position of the laser beam, the beam adjustment unit including a beam focusing unit for adjusting a focal position of the laser beam and a laser irradiation unit configured to obtain position information and alignment information of the irradiation point and to irradiate the laser beam adjusted by the beam focusing unit onto a workpiece.

According to one embodiment, the solder amount may be adjusted according to at least one of the following parameters: the thickness of the circuit board, the diameter of the insertion hole, the diameter of the fixing pin, the position of the fixing pin inserted into the insertion hole, and the height of the fixing pin inserted into the insertion hole.

According to one embodiment, the laser output may be adjusted according to at least one of the following parameters: the thickness of the circuit board, the diameter of the insertion hole, the diameter of the fixing pin, the position of the fixing pin inserted into the insertion hole, and the height of the fixing pin inserted into the insertion hole.

According to one embodiment, the shape of the laser beam may be adjusted according to at least one of the following parameters: the thickness of the circuit board, the diameter of the insertion hole, the diameter of the fixing pin, the position of the fixing pin inserted into the insertion hole, and the height of the fixing pin inserted into the insertion hole.

According to one embodiment of the present invention, the align solder is configured to be inserted into the fixing pin that is inserted into the insertion hole of the circuit board, to surround the outer circumferential surface of the fixing pin, and to be soldered by laser irradiation.

According to one embodiment, the align solder may include a bushing solder formed in a ring shape.

According to another embodiment, the align solder may include a sleeve solder formed in a sleeve shape.

According to one embodiment of the present invention, a soldering method comprises: placing a circuit board; a fixing step of placing a fixing pin into an insertion hole of a fixing block; an inserting step of inserting a solder into the fixing pin; and a soldering step of melting the align solder to perform soldering.

According to one embodiment, the soldering step may include a laser irradiation step of irradiating a laser beam onto the fixing pin, and a melting step in which the align solder is melted by the heat transferred from the fixing pin heated by the laser beam.

According to one embodiment, the soldering step may include a first laser irradiation step of irradiating a laser beam onto the fixing pin, and a second laser irradiation step of irradiating a laser beam onto the align solder, wherein lasers of the same or different wavelengths may be irradiated depending on the materials of the fixing pin and the align solder.

According to one embodiment, in the second laser irradiation step, the laser beam irradiated onto the align solder may be in the form of a ring-shaped beam.

According to one embodiment, the align solder may include a bushing solder formed in a ring shape.

According to another embodiment, the align solder may include a sleeve solder formed in a sleeve shape.

According to one embodiment, a rework step may be performed to correct the alignment of the image sensor and the image module of the circuit board by setting offsets in the x-axis, y-axis, z-axis, x-axis theta, y-axis theta, and z-axis theta directions according to the amount of shrinkage of the align solder due to laser soldering.

### ADVANTAGEOUS EFFECTS of INVENTION

According to embodiments of the present invention, by providing a solder of a specific shape at the soldering position to fix a workpiece onto a circuit board by soldering, the reliability of the soldering process can be improved.

According to embodiments of the present invention, the uniformity and stability of soldering can be ensured.

According to embodiments of the present invention, defects that may occur during the soldering process, such as the formation of void holes where soldering does not occur, can be reduced.

According to embodiments of the present invention, uniform and reliable soldering can be achieved regardless of the size (area or volume) or shape of the soldering region.

According to embodiments of the present invention, even when the soldering region (area or volume) is large such that the conventional soldering process cannot be applied or must be performed multiple times, uniform and reliable soldering can be achieved through only one or two soldering processes.

According to embodiments of the present invention, uniform and reliable soldering can also be achieved through only one or two soldering processes even when the soldering region is nonplanar or when the solder must diffuse to the opposite surface of the mounting surface.

According to embodiments of the present invention, since soldering is performed while the align solder is fixed in position, the positional accuracy of soldering is improved.

### BRIEF DESCRIPTION OF THE DRAWINGS

FIG. 1 is a schematic diagram illustrating the configuration of an align solder according to one embodiment of the present invention.
FIG. 2 is a schematic diagram illustrating the configuration of a laser soldering apparatus according to one embodiment of the present invention.
FIG. 3 is an exemplary view illustrating the soldering shape of the laser soldering apparatus according to one embodiment of the present invention.
FIG. 4 is a cross-sectional view illustrating a fixing pin into which an align solder is inserted, the fixing pin being inserted into an insertion hole of a circuit board according to one embodiment of the present invention.
FIG. 5 shows views illustrating a state in which a solder inserted into a fixing pin is soldered by a laser according to one embodiment of the present invention.
FIGS. 6 and 7 are diagrams illustrating various shapes of laser beams according to one embodiment of the present invention.
FIG. 8 is a graph illustrating a heat distribution according to the shape of a laser beam according to one embodiment of the present invention.
FIG. 9 is a diagram illustrating a state of preheating and heating by a laser according to one embodiment of the present invention.
FIGS. 10 to 12 are diagrams illustrating the configuration of an optical fiber for transmitting a laser according to one embodiment of the present invention.
FIGS. 13 and 14 are flowcharts illustrating a laser soldering method according to one embodiment of the present invention.

### DETAILED DESCRIPTION

Hereinafter, embodiments of an align solder, a laser soldering apparatus using the same, and a soldering method according to the present invention will be described in detail with reference to the accompanying drawings.

In the drawings, identical reference numerals are assigned to identical elements throughout the various figures, even if they appear in different drawings, as far as possible. In describing the embodiments of the present invention, detailed descriptions of well-known configurations or functions are omitted when they may unnecessarily obscure the understanding of the embodiments of the invention.

In describing the elements of the embodiments of the present invention, terms such as *first*, *second*, *A*, *B*, *(a)*, *(b)*, and the like may be used. These terms are merely employed to distinguish one element from another and do not limit the nature, sequence, or order of the corresponding elements. Unless otherwise defined, all terms used herein, including technical or scientific terms, have the same meaning as commonly understood by those skilled in the art to which the invention pertains. Terms that are commonly defined in dictionaries are to be interpreted as having meanings consistent with their contextual use in the relevant technical field, and, unless explicitly defined otherwise in the present application, are not to be interpreted in an idealized or overly formal sense.

Through the align solder, laser soldering apparatus using the same, and soldering method according to embodiments of the present invention, a laser processing operation such as joining, welding, bonding, or soldering an image module onto a circuit board can be performed. In the following description, the laser soldering apparatus and method according to the present invention will be explained as an example in which a soldering operation is performed. In other words, a laser processing apparatus may be employed as a soldering apparatus that performs only soldering operations. Accordingly, in the following description, such a laser processing apparatus may be referred to as a soldering apparatus.

Furthermore, the soldering apparatus using the align solder according to embodiments of the present invention can be applied not only to various processes such as welding, soldering, bonding, and joining, but also to a wide range of materials on which such processes are performed, including polymers, metals, dielectrics, semiconductors, and glass.

In the present invention, as described below, in order to fix a workpiece onto a circuit board by soldering, solder formed in a specific shape is supplied to a soldering position of the workpiece so that the soldering process proceeds, thereby improving the reliability of soldering.

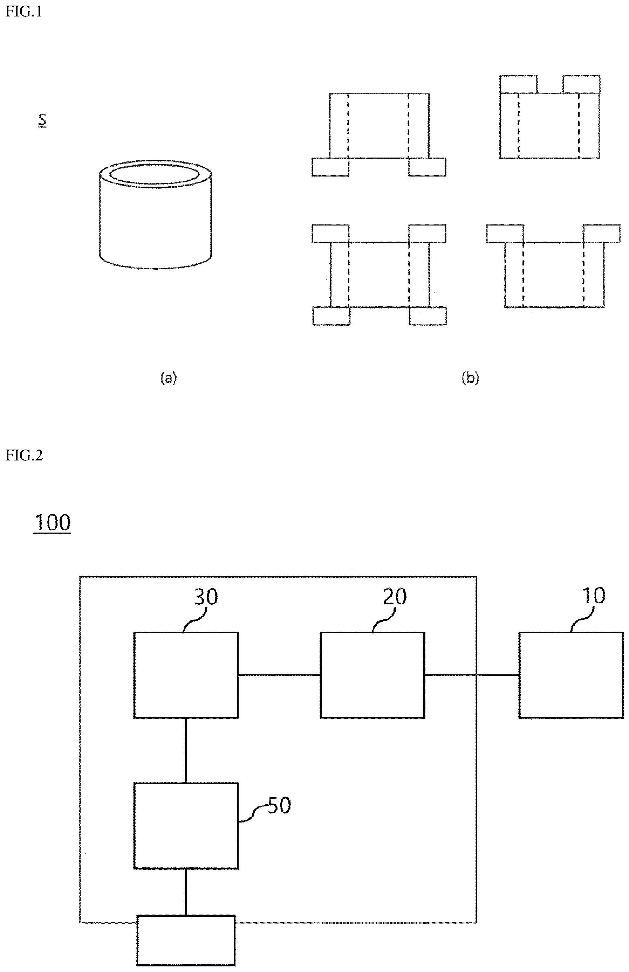

FIG. 1 is a schematic diagram illustrating the configuration of an align solder according to one embodiment of the present invention. Specifically, FIG. 1(a) illustrates the configuration of the align solder, and FIG. 1(b) illustrates various front views of align solders including bent portions.

Referring to FIG. 1, an align solder (S) may be configured to be insertable into a fixing pin that is inserted into an insertion hole of a circuit board and to surround the outer circumferential surface of the fixing pin.

Here, before soldering, the portion at which the align solder is positioned may be either the fixing pin or the insertion hole of the circuit board. That is, the fixing pin may enter the insertion hole of the circuit board while the align solder is positioned on the fixing pin, or the fixing pin may enter the insertion hole of the circuit board while passing through the align solder that is positioned on the inner circumferential surface of the insertion hole of the circuit board.

In addition, the align solder may be formed to have a length sufficient to ensure coupling between the fixing pin and the insertion hole of the circuit board. In other words, the align solder may be formed to have a length equal to that of the insertion hole of the circuit board, or may be formed to have a length extending and protruding beyond one or both of the upper and lower ends of the insertion hole. Furthermore, the thickness of the align solder may be determined according to the clearance between the fixing pin and the insertion hole, and may be set such that the align solder is positioned between the fixing pin and the circuit board within the insertion hole. The length and thickness of the align solder may be determined in accordance with the weight or volume of solder required at the soldering portion.

The align solder (S) may be formed as a bushing solder having a ring shape or as a sleeve solder having a sleeve shape. It may be inserted into the fixing pin inserted into the insertion hole of the circuit board and soldered by being melted with a laser beam so that the circuit board and the fixing pin are bonded together.

The align solder (S) may be provided in a ring shape and inserted into either the fixing pin or the insertion hole of the circuit board prior to performing soldering. When provided in a state inserted into the fixing pin before soldering, in order to ensure stable positioning of the align solder, an upper portion of the align solder may be bent inward so that the bent portion is hooked onto an upper surface of the fixing pin. Additionally, a lower portion of the align solder may be bent outward so that the bent portion is positioned at a lower side of the fixing pin. Alternatively, when provided in a state inserted into the insertion hole of the circuit board prior to soldering, one or both of an upper portion and a lower portion of the align solder may be bent outward so that the bent portion is hooked onto one or both of the upper and lower surfaces of the circuit board.

In the present invention, the term "ring shape" may refer to a configuration forming a closed ring having a sealed horizontal cross-section, as illustrated in FIG. 1, or to a configuration that is not closed, in which one side is open, although not shown in the drawings. When formed in an open-side configuration, the align solder (S) may be positioned on the fixing pin through elastic expansion and restoration of the open side when the align solder (S) is placed around the fixing pin.

The align solder may be formed in a ring shape so as to surround the fixing pin inserted into the insertion hole of the circuit board. It may be inserted together with the fixing pin into the insertion hole of the circuit board and melted by a laser beam to perform soldering.

In another embodiment, the align solder (S) may be provided in the form of a sleeve. The sleeve-shaped align solder may be configured to surround the fixing pin inserted into the insertion hole of the circuit board, and one or both ends thereof may be bent so that the align solder is soldered and bonded to the fixing pin and the circuit board. The term "sleeve shape" may refer to a configuration having a length greater than that of the "ring shape."

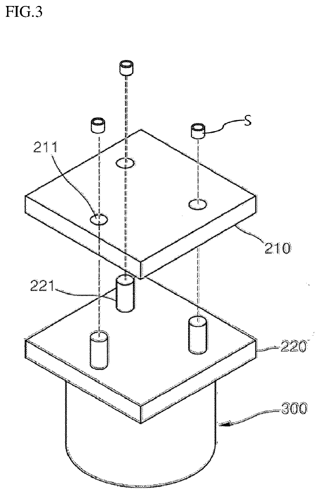

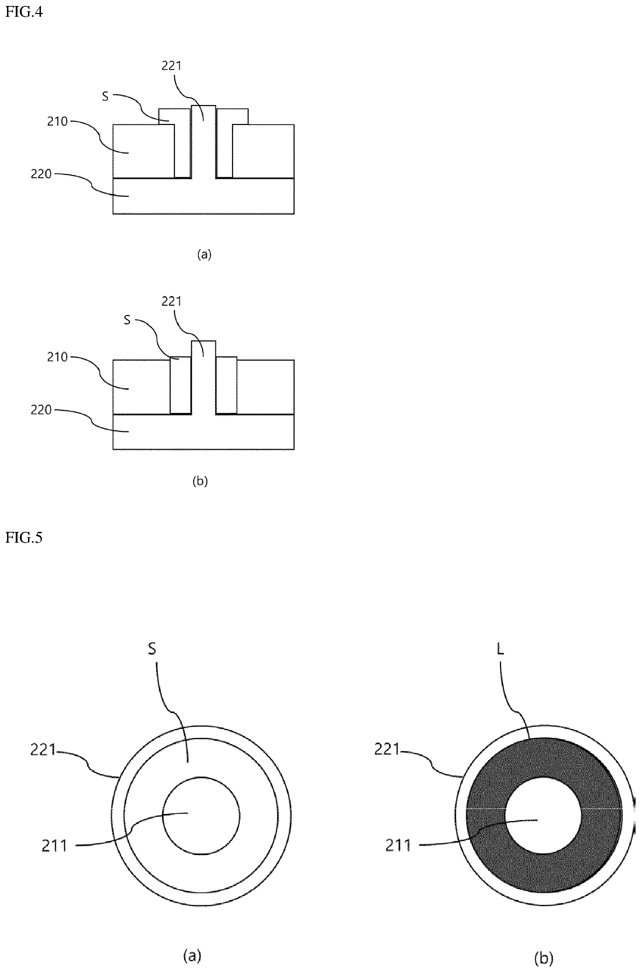

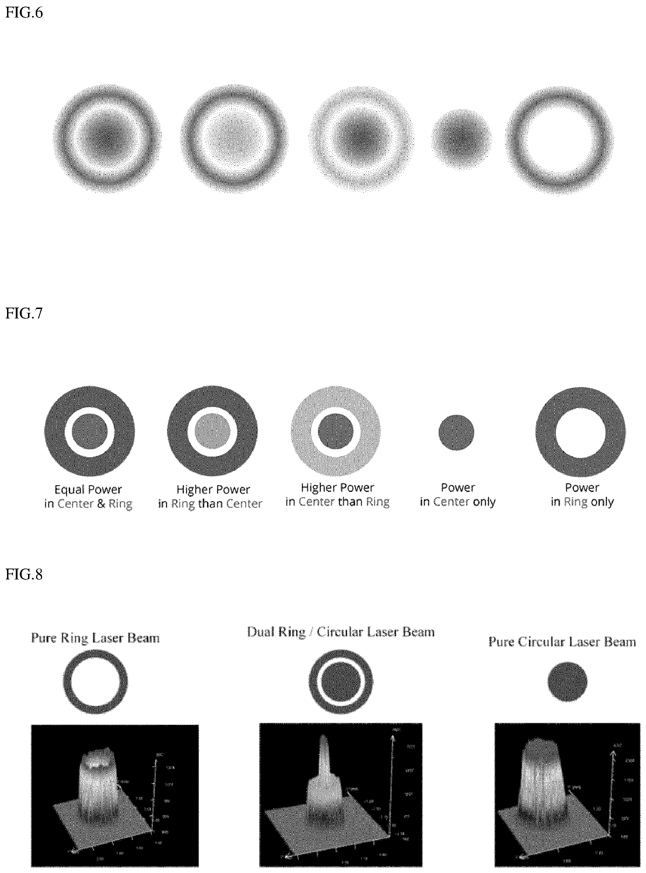

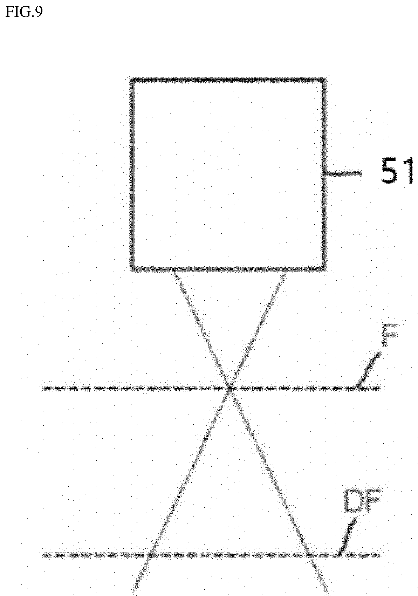

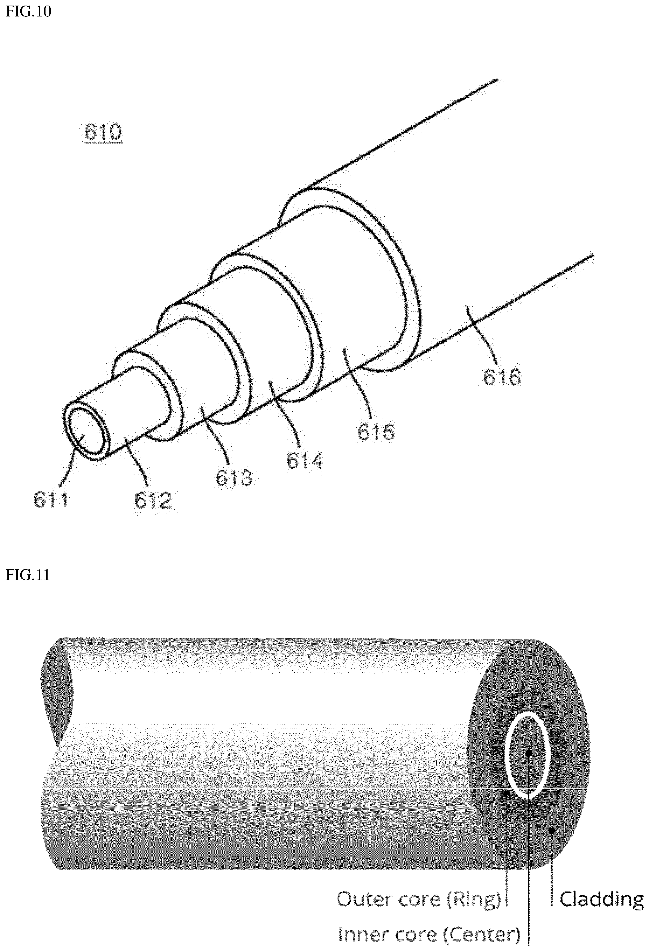

FIG. 2 is a schematic diagram illustrating a laser soldering apparatus according to one embodiment of the present invention; FIG. 3 is an exemplary view showing the soldering configuration of the laser soldering apparatus according to one embodiment of the present invention; FIG. 4 is a cross-sectional view showing a fixing pin inserted into an insertion hole of a circuit board, in which the align solder is inserted, according to one embodiment of the present invention; FIG. 5 shows views illustrating the state in which solder inserted into a fixing pin is soldered by a laser according to one embodiment of the present invention; FIGS. 6 and 7 are diagrams showing different shapes of laser beams according to one embodiment of the present invention; FIG. 8 is a graph illustrating the heat distribution according to the shape of the laser beam according to one embodiment of the present invention; FIG. 9 is a diagram showing the state of pre-heating and heating through a laser according to one embodiment of the present invention; and FIGS. 10 to 12 are diagrams illustrating the configuration of an optical fiber for transmitting a laser according to one embodiment of the present invention.

Referring to FIGS. 2 to 12, a laser soldering apparatus (100) may include a soldering unit (not shown) configured to supply an align solder (S) that is insertable into fixing pins (221) of a fixing block (220), each fixing pin being inserted into one of a plurality of insertion holes (211) formed in a circuit board (210), and to insert the align solder (S) into the fixing pins (221). The apparatus further includes a laser generating unit (20) configured to generate a laser of one or more wavelengths, such that soldering can be performed by irradiating lasers of the same or different wavelengths onto the align solder (S) and the fixing pins (221).

The fixing pins (221) inserted into the insertion holes (211) by the laser soldering apparatus (100) may be soldered by the laser beam applied to the align solder (S). Through soldering, the circuit board (210) having a plurality of insertion holes (211) formed therein and a fixing block (220) having a plurality of fixing pins (221) extending in one direction to be inserted into the insertion holes (211) may be mutually coupled.

The laser generating unit (20) may include a first generating unit (not shown) for irradiating a laser onto the fixing pins (221) and a second generating unit (not shown) for irradiating a laser onto the align solder (S). The first generating unit may irradiate a laser beam onto the fixing pins (221) to heat the fixing pins (221), thereby facilitating bonding between the fixing pins (221) and the align solder (S) melted by the second laser, and improving the mutual bonding strength. The second generating unit may irradiate a laser beam onto the align solder (S) inserted into the fixing pins (221), and the laser generated from the second generating unit is preferably irradiated in a ring shape to melt the align solder (S), which is formed in a ring or sleeve shape, to perform soldering. The wavelengths of the lasers generated from the first and second generating units may be identical or different, and the wavelength to be irradiated may be determined according to the materials of the fixing pins (221) and the align solder (S).

The laser generating unit (20) may further include a beam conversion device (30) and a beam adjustment unit (50). The laser emitted from the laser generating unit (20) may pass through the beam conversion device (30), during which the cross-sectional area of the beam can be adjusted. The adjusted beam cross-section may correspond to the cross-sectional area of the laser to be irradiated onto the soldering position. The beam conversion device (30) may also control the shape of the laser beam, such as a circular beam, a ring-shaped beam, or a composite beam including an inner circular beam and an outer ring-shaped beam.

The beam adjustment unit (50) may include a beam focusing unit (not shown) for adjusting the focal position of the laser beam, and a laser irradiation unit (not shown) configured to irradiate the laser beam based on the positional and alignment information obtained from the beam focusing unit. In some cases, a thermal distribution measuring unit (not shown) may also be included to measure the surface temperature or melting temperature of the soldering work region. A monitoring unit (not shown) may further be provided, which may include, for example, a dynamic focusing module or a camera module, though the invention is not limited thereto.

The laser soldering apparatus may include a control unit (10). The control unit (10) may be configured to control the output of the lasers generated by the first generating unit and the second generating unit according to the materials of the fixing pins (221) and the align solder (S), thereby adjusting the laser output in accordance with those materials.

The control unit (10) may control laser irradiation to perform the soldering process at a soldering point. A transfer unit (not shown) may transport the circuit board to position it accurately at a soldering location-i.e., at the region of the fixing pins (221) and the insertion holes (211).

The laser soldering apparatus (100) may be adjusted so that the laser is irradiated onto the align solder (S) melted by the laser beam. The irradiation position of the laser generated by the laser generating unit may be controlled by the control unit (10). Based on detection values input from or measured by a monitoring unit (not shown), the laser irradiation coordinates may be determined, and the laser may be adjusted via the beam conversion device so as to be irradiated precisely onto the soldering position. In some cases, such focal coordinates may be adjusted using a precision stage configured with at least three axes, and a tilt stage may be included to control the angle at which the laser beam is irradiated. The tilt stage may include one or more of X-theta, Y-theta, and Z-theta axes.

The fixing block (220) may be provided as a structure coupled to the circuit board (210), or alternatively, the circuit board (210) may be seated on one side of the fixing block (220).

In one example according to the present invention, the fixing block (220) may be provided on one side of a workpiece (300) and may include fixing pins (221) protruding upward. The circuit board (210) may be configured to be in surface contact with the fixing block (220) of the workpiece (300) so as to fix the workpiece (300) onto the circuit board, and insertion holes (211) into which the fixing pins (221) are inserted may be formed therein. According to the present invention, the fixing pins (221) of the fixing block (220) may be formed to protrude a predetermined length above the top of the insertion holes (211), thereby allowing molten solder to flow into and fill the space between the fixing pins (221) and the insertion holes (211), thus enhancing the mutual bonding strength through soldering.

A plurality of insertion holes (211) may be provided, and a fixing pin (221) may be inserted into each insertion hole (211). The align solder (S) may be inserted into each fixing pin (221) inserted into each insertion hole (211), and the laser may be sequentially irradiated onto each align solder (S). By sequentially irradiating the laser onto the align solders (S) inserted into the plurality of insertion holes (211), alignment of the workpiece (300) can be easily achieved before the molten align solder (S) solidifies, thereby allowing accurate alignment.

In another embodiment, a plurality of laser generating units may be provided. In this case, the align solder (S) may be inserted into each fixing pin (221) inserted into the respective insertion holes (211), and lasers generated from the plurality of laser generating units may be simultaneously irradiated onto the respective align solders (S) to perform soldering. By simultaneously irradiating lasers onto the align solders (S) inserted into the plurality of insertion holes (211), alignment of the workpiece (300) can be easily performed before the molten align solder (S) solidifies, thereby ensuring proper alignment.

According to one embodiment of the present invention, the laser soldering apparatus (100) may perform a rework operation. After soldering has been completed and the solder of the align solder (S) has solidified, the laser may be irradiated again onto the align solder (S) to perform rework, thereby correctly realigning the workpiece (300).

In the laser soldering apparatus (100) according to one embodiment of the present invention, offsets in the X-axis, Y-axis, Z-axis, X-axis theta, Y-axis theta, and Z-axis theta directions may be set according to the amount of shrinkage of the solder caused by laser soldering, which has been determined through prior experimentation.
Based on these offsets, the image sensor and the image module of the circuit board can be realigned and corrected to perform precise rework.

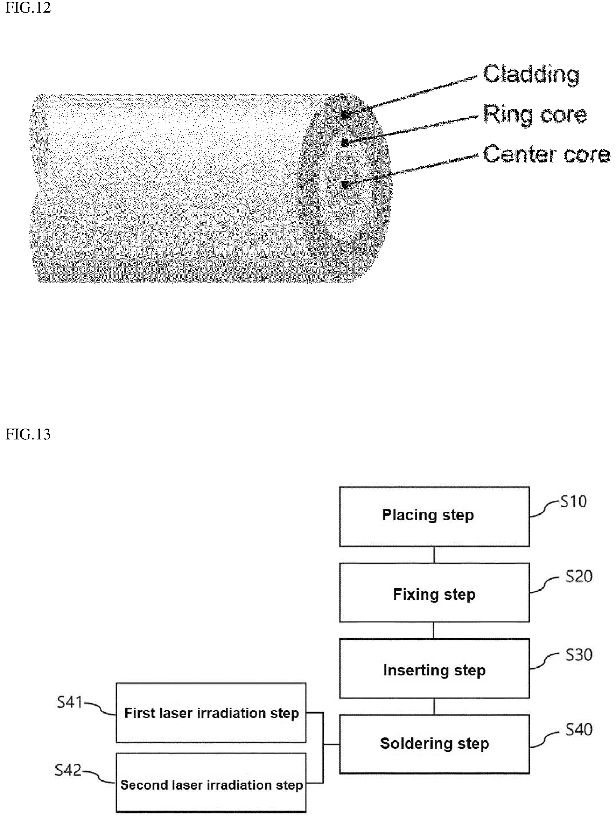

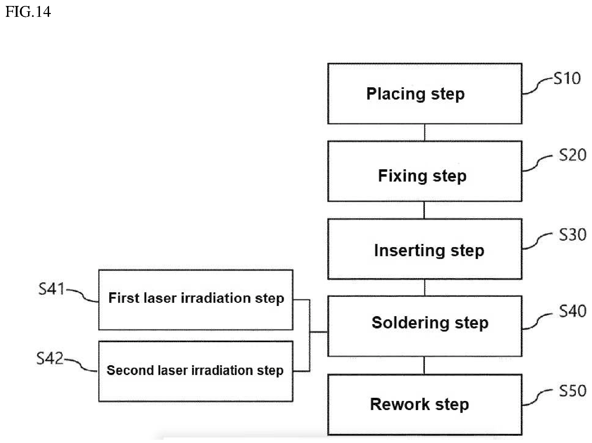

FIGS. 13 and 14 are flowcharts illustrating a laser soldering method according to one embodiment of the present invention.

Specifically, referring to FIGS. 13 and 14, first, to process and couple the workpiece (300) with the circuit board, the workpiece (300) may be positioned at a corresponding region (S10). At this time, the workpiece (300) may be provided in a state in which a fixing block (220) is formed, such that the circuit board is coupled to the workpiece, or the circuit board may be seated on the workpiece in an integrated form. Subsequently, the workpiece (300) is positioned such that the fixing pins (221) of the fixing block (220) are inserted into the insertion holes (211) of the circuit board (210). Here, the circuit board (210) may include a plurality of insertion holes (211) formed radially on the circuit board (210), and a plurality of fixing pins (221) formed on the fixing block (220) may be inserted into the corresponding insertion holes (211) to be stably fixed.

Next, while the insertion holes (211) and the fixing pins (221) are in the inserted state, an align solder (S) may be inserted into the fixing pins (221) (S30). Once the align solder (S) is inserted into the fixing pins, the soldering position may be monitored.
Here, the soldering position may be determined based on the center point of the fixing pin (221) inserted into the insertion hole (211) of the circuit board (210) on a plane, and according to the distance between the center point of the align solder (S) inserted into the fixing pin (221) and the center point of the insertion hole (211). That is, the position where the inner circumferential surface of the insertion hole (211) of the circuit board (210) and the outer circumferential surface of the align solder (S) are closest to each other is primarily set as the soldering position, and portions that are at least partially overlapped may be additionally set as further soldering positions.

Once the soldering position has been determined, soldering may be performed by melting the align solder (S) (S40). In the soldering process, lasers of the same or different wavelengths may be irradiated onto the align solder (S) and the fixing pins (221), depending on the materials of the align solder (S) and the fixing pins (221).

In the soldering step (S40), a first laser irradiation step (S41) may be performed in which a laser beam is irradiated onto the fixing pin (221), and a second laser irradiation step (S42) may be performed in which a laser beam is irradiated onto the align solder (S). Depending on the materials of the fixing pin (221) and the align solder (S), the laser beams may be generated and irradiated at the same or different wavelengths.

In another embodiment of the soldering step, a laser irradiation step may be performed to irradiate a laser beam onto the fixing pin (221), and a melting step may follow, in which the align solder (S) is melted by the heat transferred from the fixing pin (221) that has been heated by the laser beam. That is, the fixing pin (221) may be irradiated with a laser beam in the laser irradiation step, and the align solder (S) may be melted by the heat transmitted from the fixing pin (221) heated by the laser beam, thereby performing soldering.

Depending on the shapes and sizes of the fixing pin (221) and the align solder (S), the laser beam may be irradiated onto the fixing pin (221), the align solder (S), or both the fixing pin (221) and the align solder (S). The laser beam to be irradiated may be in one of various forms such as a circular beam, a ring-shaped beam, or a combined beam including an inner circular beam and an outer ring-shaped beam.

In the laser soldering method, the solder amount may vary depending on the height of the insertion hole (211) determined by the thickness of the circuit board, the diameter of the fixing pin (221) and the align solder (S), and the central deviations between the fixing pins (221) inserted into the insertion holes (211) and between the align solder (S) and the insertion holes (211). Accordingly, soldering may be performed by adjusting the type, shape, or quantity of the align solder (S) inserted into the fixing pins (221) based on these parameters.

Furthermore, a preheating process may be additionally performed to improve wettability. If a region maintains a relatively low temperature, the spreadability of the solder may deteriorate, leading to soldering defects such as cold joints, cracks, or poor bonding. Here, the term *"spreadability"* refers to the degree to which the solder is distributed so that it contacts a larger area at the soldering point. Therefore, to prevent a decrease in spreadability due to the relatively low temperature of the region of the align solder (S) compared to the solder, a preheating process may be additionally performed to preheat the periphery of the fixing pin (221), the align solder (S), or the insertion hole (211) of the circuit board.

As illustrated in FIG. 9, this preheating process may be performed either by additional laser irradiation from the laser generating unit (20) or by adjusting the height of a head portion (51) so that the laser beam is spaced apart from the focal point, thereby forming a distance between the laser focus and the fixing pin or the align solder position. In this configuration, the head portion (51) may selectively adjust the focal distance (F) and the defocal distance (DF) relative to the fixing pin or the align solder point to achieve preheating and heating through the laser.

When the fixing pin (221) is positioned at the focal distance (F), the laser output becomes concentrated, which may cause the fixing pin (221) to melt or be damaged by heat. Accordingly, when the laser is focused and irradiated at the focal distance (F), the laser output may be adjusted to prevent thermal damage.

When the fixing pin (221) is positioned at the defocal distance (DF), the laser output is dispersed and the irradiation area increases. Accordingly, damage to the fixing pin (221) can be minimized, and by adjusting the irradiation area at the defocal position, only the fixing pin (221) or both the fixing pin (221) and the align solder (S) can be selectively heated.

Therefore, when the laser is irradiated while focused at the defocal distance (DF), the temperature difference between the fixing pin (221) and the align solder (S) can be minimized, thereby improving the solder wettability and increasing the bonding area.

The region positioned at the above-described defocal distance (DF) may thus be preheated. To improve soldering quality, at least one of the fixing pin (221), the align solder (S), or the insertion hole (211) of the circuit board may be located within the preheated area. In addition, the area surrounding the bonding point-including the bonding point itself-may serve as a preheating region (not shown).

The laser soldering method may further include a rework step for realignment according to the alignment state of the workpiece. Depending on the alignment condition of the workpiece, the soldered joint may be reworked by irradiating the laser onto the solder, reheating it, and thereby correcting the alignment.

In the rework step, offsets in the X-axis, Y-axis, Z-axis, X-theta, Y-theta, and Z-theta directions may be set according to the amount of solder shrinkage caused by laser soldering, as determined through prior experimentation. Through these offsets, the alignment between the image sensor and the image module of the circuit board can be corrected.

FIGS. 10 to 12 are diagrams illustrating the configuration of an optical fiber (610) for transmitting a laser according to one embodiment of the present invention.

Referring to FIGS. 10 to 12, the laser transmitted to the head portion (230) of the laser soldering apparatus (100) according to the present invention may be a fiber laser (FL) or a diode laser, which is delivered through an optical fiber. Such an optical fiber (610) may include a core (611) through which the laser beam is transmitted, and one or more claddings (612, 613, 614, 615, 616) surrounding the core. Specifically, the core (611) is configured to transmit the laser beam through total internal reflection or the like, while the claddings (612-616) function to protect the core (611) from external impact and prevent exposure to the outside. For example, a plurality of claddings (612, 613, 614, 615, 616) may include materials such as shock-absorbing polyvinyl chloride (PVC), aramid yarn for enhanced durability, polyimide, or silicone.

In addition, the shape of the core (611) positioned within the claddings (612-616) may vary and may be formed in various geometries such as rectangular, polygonal, or circular.

The core may also be configured as a combination of a center core and a ring core, and the size and shape of the core can affect the laser beam's size and quality.

Furthermore, the apparatus and method according to embodiments of the present invention may include the following configurations.
The inspection process may include a first inspection (pre-inspection) and a second inspection (post-inspection) performed by an inspection unit. In the first inspection, the alignment state and the soldering position are detected before the soldering is performed, while in the second inspection, after soldering is completed, one or more of the following defects in the soldered portion (110) may be detected: open circuits, shorts, cracks, voids, excessive solder, contamination by bridging, insufficient solder, cold solder, poor wettability, overheating, corrosion, erosion, component misalignment, gaps between components, and unsoldered portions. As described below, workpieces that fail to meet the quality standards in the second inspection may be classified separately from those meeting the quality standards, and resoldering (rework) may be performed on the workpieces that do not meet the required standards.

First, the laser supplied from the laser supply unit may have a wavelength that provides a high laser absorption rate according to the type of solder material.
The laser may be a solid-state laser, such as a fiber laser or a diode laser. The laser beam generated from the laser generating unit can be transmitted through the optical fiber to the laser soldering head without requiring a separate optical mirror. Accordingly, stable laser delivery and precise operation during soldering by laser irradiation can be achieved.

Secondly, the laser processing apparatus may include a pick-and-place head or a jet head for positioning the align solder within the insertion holes of the circuit board. The apparatus may also include a laser soldering optical head, which may comprise a beam conversion device, a beam adjustment unit, a laser beam focusing optical unit, a pyrometer for measuring temperature, and a vision optical unit for recognizing the soldering position. The pick-and-place head, jet head, and laser soldering optical head may be configured as a single head or as a dual head including two heads. Furthermore, they may be configured as a multi-head system including three or more heads. By providing two or more heads in this manner, the productivity of the apparatus can be significantly increased.

Thirdly, the apparatus may include a vision inspection module (unit) or perform a vision inspection step. By including such a vision inspection module or step, pre-inspection can be performed to check, for example, the position of a camera module to be soldered, the alignment state, and the intended soldering position, and post-inspection can be performed to evaluate soldering quality after the process. Accordingly, (1) a vision inspection module equipped with low- and high-magnification lenses may be installed, or (2) a motorized variable zoom lens (1× to about 18×, with higher magnification possible depending on the lens design) may be mounted to automatically inspect from low to high magnification and from wide to narrow areas. The pre-inspection and post-inspection may be performed by a single vision inspection module, or to improve productivity, they may be configured as separate modules-for example, one for pre-inspection and another for post-inspection.

When both pre-inspection and post-inspection are implemented using a single vision inspection module, a workpiece that has undergone pre-inspection may move to the soldering position for soldering and then return to its original position for post-inspection. When two vision inspection modules are provided-one for pre-inspection and one for post-inspection-the workpiece sequentially moves through the pre-inspection module, the laser soldering optical head, and the post-inspection module, where inspection and soldering are performed in order.

Furthermore, the apparatus may further include an infrared (IR) inspection device or a three-dimensional inspection device for real-time monitoring of soldering quality, enabling control of process parameters or performing post-inspection to detect one or more of the following soldering defects: open circuits, shorts, cracks, voids, excessive solder, contamination by bridging, insufficient solder, cold solder, poor wettability, overheating, corrosion, erosion, component misalignment, gaps between components, and unsoldered regions.

Fourthly, the apparatus may further include a sorting device for classifying workpieces that do not meet the required soldering quality standards after post-inspection.

Fifthly, the apparatus may further include a repair device for repairing workpieces that fail to meet the required soldering quality standards after post-inspection. The repair device may reirradiate the laser to remelt the solder portion, thereby improving solder wettability, or may remove pre-existing solder and perform resoldering (rework). When removing pre-existing solder, the apparatus may automatically remove the solder using a mechanical tool such as a pin, or it may re-melt the solder using a laser and remove it by suction in an automated manner.

Sixthly, to manage the quality after soldering, the apparatus may further include a cleaning device equipped with a dust collection system for removing dust and foreign substances.
The cleaning device may include one or more of the following: a dry air blowing device, a carbon dioxide (CO₂) snow cleaning device, a plasma cleaning device, a laser cleaning device, and an inert gas blowing device.

Seventhly, the apparatus may further include a pre-soldering unit for pre-depositing solder according to the type of material to be soldered. Additionally, a laser soldering optical head may be further provided to maximize soldering quality and production efficiency.

The embodiments of the present invention are not limited to the foregoing description of exemplary embodiments. It will be apparent to those skilled in the art that various modifications, substitutions, and equivalent implementations can be made without departing from the spirit and scope of the invention. Accordingly, the true scope of the invention shall be defined by the appended claims.

### LIST OF REFERENCE SIGNS

10: Control unit
20: Laser generating unit
30: Beam conversion device
50: Beam adjustment unit
100: Laser soldering apparatus
210: Circuit board
211: Insertion hole
220: Fixing block
221: Fixing pin
300: Workpiece
S: Solder
W: Optical fiber

## Claims

1. A laser soldering apparatus comprising:
a soldering unit configured to supply an align solder insertable into a fixing pin of a fixing block, the fixing pin being inserted into each of a plurality of insertion holes formed in a circuit board, and to insert the align solder into the fixing pin; and
at least one laser generating unit capable of generating a laser light having one or more wavelengths, wherein the align solder and the fixing pin can be soldered by irradiating the same or different wavelengths of laser onto the align solder and the fixing pin.

2. The laser soldering apparatus according to claim 1,
wherein the laser generating unit is configured to sequentially irradiate the align solder inserted into each of the plurality of insertion holes.

3. The laser soldering apparatus according to claim 1,
wherein a plurality of laser generating units are provided, and
laser lights are simultaneously irradiated onto each of the align solders inserted into the plurality of insertion holes.

4. The laser soldering apparatus according to claim 1,
wherein the laser generating unit is configured to rework the align solder by irradiating the laser onto the soldered align solder.

5. The laser soldering apparatus according to claim 1,
wherein the align solder comprises a bushing solder formed in a ring shape.

6. The laser soldering apparatus according to claim 1,
wherein the align solder comprises a sleeve solder formed in a sleeve shape.

7. The laser soldering apparatus according to claim 1,
wherein the laser generating unit comprises:
a first generating unit configured to irradiate a laser onto the fixing pin; and
a second generating unit configured to irradiate a laser onto the align solder.

8. The laser soldering apparatus according to claim 7,
wherein the second generating unit is configured to generate and irradiate a ring-shaped laser beam onto the align solder.

9. The laser soldering apparatus according to claim 8,
wherein the output of the lasers generated by the first and second generating units is controlled according to the materials of the fixing pin and the align solder.

10. The laser soldering apparatus according to claim 1,
wherein transmission of the laser beam is performed through an optical fiber.

11. The laser soldering apparatus according to claim 1,
further comprising a beam conversion device configured to adjust the shape of the laser beam.

12. The laser soldering apparatus according to claim 1,
further comprising a beam adjustment unit configured to control an irradiation position of the laser beam,
wherein the beam adjustment unit comprises:
a beam focusing unit configured to adjust a focal position of the laser beam; and
a laser irradiation unit configured to obtain position information and alignment information of the irradiation point and to irradiate the laser beam adjusted by the beam focusing unit onto a workpiece.

13. The laser soldering apparatus according to claim 1,
wherein the amount of solder is controlled based on at least one condition selected from the group consisting of:
a thickness of the circuit board, a diameter of the insertion hole, a diameter of the fixing pin, a position of the fixing pin inserted into the insertion hole, and a height of the fixing pin inserted into the insertion hole.

14. The laser soldering apparatus according to claim 1,
wherein an output of the laser is controlled based on at least one condition selected from the group consisting of:
a thickness of the circuit board, a diameter of the insertion hole, a diameter of the fixing pin, a position of the fixing pin inserted into the insertion hole, and a height of the fixing pin inserted into the insertion hole.

15. The laser soldering apparatus according to claim 1,
wherein a shape of the laser beam is adjusted based on at least one condition selected from the group consisting of:
a thickness of the circuit board, a diameter of the insertion hole, a diameter of the fixing pin, a position of the fixing pin inserted into the insertion hole, and a height of the fixing pin inserted into the insertion hole.

16. An align solder configured to be insertable into a fixing pin that is inserted into an insertion hole of a circuit board,
the align solder being disposed to surround an outer circumferential surface of the fixing pin and being soldered by laser irradiation.

17. The align solder according to claim 16,
wherein the align solder comprises a bushing solder formed in a ring shape.

18. The align solder according to claim 16,
wherein the align solder comprises a sleeve solder formed in a sleeve shape.

19. A laser soldering method comprising:
a step of placing a circuit board;
a fixing step of placing a fixing pin in an insertion hole of a fixing block;
an inserting step of inserting a solder into the fixing pin; and
a soldering step of melting the align solder to perform soldering.

20. The laser soldering method according to claim 19,
wherein the soldering step comprises:
a laser irradiation step of irradiating a laser beam onto the fixing pin; and
a melting step in which the align solder is melted by heat transferred from the fixing pin heated by the laser beam.

21. The laser soldering method according to claim 19,
wherein the soldering step comprises:
a first laser irradiation step of irradiating a laser beam onto the fixing pin; and
a second laser irradiation step of irradiating a laser beam onto the align solder,
wherein laser beams of identical or different wavelengths are irradiated according to the materials of the fixing pin and the align solder.

22. The laser soldering method according to claim 21,
wherein in the second laser irradiation step, the laser beam irradiated onto the align solder is irradiated in a ring-shaped.

23. The laser soldering method according to claim 19,
wherein the align solder comprises a bushing solder formed in a ring shape.

24. The laser soldering method according to claim 19,
wherein the align solder comprises a sleeve solder formed in a sleeve shape.

25. The laser soldering method according to claim 19,
further comprising a rework step,
wherein the rework step includes setting offsets in x-axis, y-axis, z-axis, x-axis theta, y-axis theta, and z-axis theta directions based on a contraction amount of the align solder caused by laser soldering, and correcting alignment between an image sensor and a camera module of the circuit board.
